# EUROPÄISCHE PATENTANMELDUNG

(11) **EP 4 331 332 A1**
(43) Veröffentlichungstag der Anmeldung: **06.03.2024**
(21) Anmeldenummer: 23179672.3
(22) Anmeldetag: 16.06.2023
(51) Int. Cl.: A01B 69/00, A01D 34/00, A01B 69/04, A01B 79/00, A01D 41/127, G05D 1/00

(54) **SYSTEM ZUR BESTIMMUNG EINER BESTANDSKANTE SOWIE SELBSTFAHRENDE ERNTEMASCHINE**

(30) Priorität: 25.08.2022 DE 102022121482
(71) Anmelder: CLAAS Selbstfahrende Erntemaschinen GmbH, 33428 Harsewinkel (DE)
(72) Erfinder: Belau, Sven Carsten, 33332 Gütersloh (DE); Heitmann, Christoph, 48231 Warendorf (DE); Neitemeier, Dennis, 59510 Lippetal (DE); Bönig Dr., Ingo, 33330 Gütersloh (DE)
(74) Vertreter: CLAAS Gruppe

(57) **Zusammenfassung**

Die vorliegende Anmeldung betrifft ein System (1) zur Bestimmung einer Bestandskante (2). Um ein System (1) zur Bestimmung einer Bestandskante (2) bereitzustellen, das die Nachteile aus dem Stand der Technik behebt und ein Einspuren einer selbstfahrenden Erntemaschine (1) in einen Pflanzenbestand (10) vereinfacht, ist erfindungsgemäß vorgesehen, dass das System eine Recheneinheit (3) sowie mindestens eine Kamera (4) umfasst, wobei die Kamera (4) dazu vorgesehen und eingerichtet ist, optische Informationen in Form diskreter Bilder (5) einer Frontumgebung (6) einer landwirtschaftlichen Erntemaschine (7) zu erfassen, wobei die Recheneinheit (3) und die Kamera (4) derart in Daten übertragender Weise miteinander verbunden sind, dass die Bilder (5) an die Recheneinheit (3) leitbar sind, wobei die Recheneinheit (3) dazu vorgesehen und eingerichtet ist, mindestens eines der Bilder (5) unter Nutzung einer künstlichen Intelligenz derart zu verarbeiten, dass ein Pflanzenbereich (8) eines Feldes (9), auf dem ein Pflanzenbestand (10) steht, von einem verbleibenden Restbereich (11) des Feldes (9) abgegrenzt und der Pflanzenbestand (10) auf diese Weise bestimmt wird, wobei die Recheneinheit (3) dazu vorgesehen und eingerichtet ist, anhand der vorgenommenen Bestimmung des Pflanzenbestands (10) die Bestandskante (2) des Pflanzenbestands (10) zu bestimmen.

Ferner betrifft die vorliegende Anmeldung eine selbstfahrende Erntemaschine (1).

## Beschreibung

Die vorliegende Anmeldung betritt ein System zur Bestimmung einer Bestandskante gemäß dem Oberbegriff von Anspruch 1 sowie eine selbstfahrende Erntemaschine gemäß Anspruch 11.

Zur Bearbeitung von Feldern werden in aller Regel selbstfahrende Erntemaschinen verwendet. Dabei sind Erntemaschinen in Form von Mähdreschern oder auch Feldhäckslern bekannt, wobei letztere zur Aufnahme und Zerkleinerung von Erntegut wie Gras, Luzerne oder Mais dienen. In jedem Fall wird die Erntemaschine typischerweise in einen Pflanzenbestand manuell eingespurt, sodass die Erntemaschine das Erntegut bearbeiten kann. Sofern ein Lenkwinkel der Erntemaschine beim Einspuren in den Pflanzenbestand manuell eingestellt wird, besteht jedoch die Gefahr, dass einzelne Pflanzenreihen stehen gelassen werden oder eine Schneidwerksbreite der Erntemaschine nicht vollständig ausgelastet wird. Zudem bedarf die manuelle Lenkung kontinuierliche Eingaben eines Fahrers der Erntemaschine, wodurch eine hohe (menschliche) Fehlerquelle hervorgerufen wird. Folge ist eine fehlerhaft durchgeführte Bearbeitung des Felds, welche zur Notwendigkeit einer zweiten Bearbeitung der stehengelassenen Pflanzenreihen führt.

Um die vorgenannten Probleme zu beheben, sind Systeme bekannt, die das manuelle Einspuren der Erntemaschine erleichtern sollen. So offenbart die EP 3 300 561 A1 eine selbstfahrende landwirtschaftliche Arbeitsmaschine, welche ein Bestimmen einer Bestandskante eines Feldbestands mittels eines Lasersensors ermöglichen soll. Der Lasersensor soll ein Umfeld der Arbeitsmaschine scannen und auf Grundlage von Sensordaten eine vorhandene Fahrgasse ermitteln. Nachteilig an der Arbeitsmaschine ist jedoch, dass Lasersensoren sehr kostenintensiv sind.

Der vorliegenden Anmeldung liegt mithin die Aufgabe zugrunde, ein System bereitzustellen, das die Nachteile aus dem Stand der Technik behebt und ein Einspuren der Erntemaschine in einen Pflanzenbestand vereinfacht.

Die zugrunde liegende Aufgabe wird mittels eines Systems mit den Merkmalen des Anspruchs 1 gelöst. Vorzugsweise Ausgestaltungen ergeben sich aus den zugehörigen Unteransprüchen.

Das erfindungsgemäße System umfasst eine Recheneinheit als auch mindestens eine Kamera. Im Sinne der vorliegenden Erfindung wird unter einer "Kamera" jeder optische Sensor verstanden, der mindestens zweidimensionale Sensordaten ausgibt. Die Kamera ist dabei dazu vorgesehen und eingereicht, optische Sensordaten in Form diskreter Bilder zu erfassen. Bei der Kamera kann es sich um eine herkömmliche Kamera handeln, ebenso kann die Kamera in Form eines LiDAR-Sensors vorliegen. Insbesondere soll die Kamera hierbei Bilder einer Frontumgebung einer landwirtschaftlichen Erntemaschine erfassen, d.h. Bilder einer Umgebung, die sich bei einem Betrieb der Erntemaschine in einer Fahrtrichtung der Erntemaschine betrachtet vor der Erntemaschine befinden.

Die von der Kamera erfassten Daten sind dabei an die Recheneinheit des Systems leitbar. Hierzu sind die Recheneinheit und die Kamera in Daten übertragender Weise miteinander verbunden. Beispielsweise stehen die Kamera und die Recheneinheit über Kabel miteinander in Verbindung. Eine drahtlose Verbindung, beispielweise mittels Bluetooth, ist ebenfalls denkbar.

Die Recheneinheit ist ferner dazu vorgesehen und eingereicht, mindestens eines der Bilder derart zu verarbeiten, dass ein Pflanzenbereich eines Felds, auf dem der Pflanzenbestand steht, von einem verbleibenden Restbereich des Feldes abgrenzbar ist. Unter einem "Pflanzenbereich" wird im Sinne der vorliegenden Anmeldung ein Bereich verstanden, in dem ein "Pflanzenbestand" steht. Bei dem Pflanzenbestand kann es sich beispielsweise um Getreide oder ein anderes mittels der landwirtschaftlichen Erntemaschine abzuerntendes Erntegut, insbesondere Gras, Luzerne oder Mais, handeln. Der Pflanzenbereich unterscheidet sich von "Restbereich", d.h. dem Bereich, in dem kein Pflanzenbestand steht. Beispielsweise kann es sich bei dem Restbereich um einen Bereich handeln, der bereits abgeerntet wurde, sodass dieser lediglich von Acker und/oder Resten von Pflanzenteilen, beispielsweise Stängeln, gebildet ist.

Zur Abgrenzung des Pflanzenbereichs von dem Restbereich ist die Nutzung einer künstlichen Intelligenz vorgesehen. Infolge der Abgrenzung des Pflanzenbereichs von dem Restbereich ist der Pflanzenbestand bestimmbar. Als Folge der Bestimmung des Pflanzenbestands ist die Bestandskante des Pflanzenbestands mittels der Recheneinheit bestimmbar. Als "Bestandskante" wird im Sinne der vorliegenden Anmeldung die Grenze zwischen dem Pflanzenbereich und dem Restbereich verstanden.

Das erfindungsgemäß System hat viele Vorteile. Insbesondere ermöglicht das System eine Bestimmung einer Bestandskante eines Pflanzenbestands. Informationen über den Pflanzenbestand können dazu genutzt werden, eine landwirtschaftliche Erntemaschine einfach und präzise in die Bestandskante einzuspuren, sodass der Pflanzenbestand vollständig von der Erntemaschine bearbeitet bzw. abgeerntet werden kann. Auf diese Weise kann eine Effizienz der Erntemaschine verbessert werden. Die Verwendung einer Kamera ist dabei deutlich kostengünstiger als die im Stand der Technik beschriebene Verwendung eines Lasersensors. Mittels der bestimmten Bestandskante des Pflanzenbestands lässt sich eine landwirtschaftliche Erntemaschine besonders gut in den Pflanzenbestand einspuren, sodass ein Auslassen von einzelnen Pflanzenreihen verhindert ist. Vorteilhafter Weise kann somit zum einen eine Effizienz der Erntemaschine verbessert werden. Zum anderen müssen einzelne Bereiche nicht doppelt überfahren werden, um übrig gebliebene Pflanzenreihen zu bearbeiten.

Es ist gemäß einer vorzugsweisen Ausgestaltung der Erfindung vorgesehen, dass die künstliche Intelligenz ein trainiertes neuronales Netzwerk umfasst. Es hat sich herausgestellt, dass die Verwendung eines neuronalen Netzwerks besonders dazu geeignet ist, die Bestandskante zu bestimmen. Die Verwendung eines trainierten neuronalen Netzwerks wird auch als Deep Learning bezeichnet. Andere Arten künstlicher Intelligenz sind jedoch auch vorstellbar.

Vorzugsweise ist die Recheneinheit dazu vorgesehen und eingerichtet, eine Segmentierung einzelner Bilder vorzunehmen, mittels der ein Inhalt eines jeweiligen Bildes in zusammenhängende Segmente unterteilt wird. Bei der Segmentierung werden inhaltlich zusammenhängende Regionen mittels einer Zusammenfassung benachbarter Pixel des Bilds entsprechend einem bestimmten Homogenitätskriterium erzeugt. Hierzu wird die Frontumgebung der landwirtschaftlichen Arbeitsmaschine zunächst mittels der Kamera erfasst und es werden Bilder der Frontumgebung erzeugt. Anschließend werden die Bilder segmentiert und bestimmte Merkmale extrahiert. Auf Grundlage der Merkmale werden die Bilder klassifiziert, um eine Aussage über das jeweilige Bild treffen zu können.

Gemäß einer vorteilhaften Ausgestaltung der Erfindung ist dabei vorgesehen, dass die Recheneinheit dazu vorgesehen und eingerichtet ist, einzelne Bilder semantisch zu segmentieren, wobei zusammenhängende Segmente verschiedenen Klassen zugeordnet werden, wobei vorzugweise eine Klasse "Pflanzenbestand" und eine Klasse "Hintergrund" sind. Die Einteilung in die Klasen "Pflanzenbestand" und "Hintergrund" ermöglicht die Abgrenzung zwischen dem Pflanzenbereich und dem Restbereich, sodass der Pflanzenbereich des Feldes bestimmbar ist. Vorzugsweise ist dabei vorgesehen, dass hierzu ein neuronales Netz verwendet wird, welches im Vorfeld trainiert wurde. Dabei ist vorstellbar, dass dem neuronalen Netz entsprechende Bilddaten zugeführt worden sind. Bei dem neuronalen Netz kann es sich beispielsweise um UNET mit einer mobileNET oder mobileNETV2 Architektur handeln.

Eine vorzugsweise Ausgestaltung sieht vor, dass die Recheneinheit dazu vorgesehen und eingerichtet ist, entlang der Bestandskante ein Polygon zu definieren. Eine vorteilhafte Ausgestaltung der Erfindung sieht ferner vor, dass die Recheneinheit dazu vorgesehen und eingerichtet ist, das Polygon entlang einer Segmentgrenze zwischen den Segmenten der Klassen "Pflanzenbestand" und "Hintergrund" zu definieren. Da der Pflanzenbestand keine ideale geometrische Form bildet, hat sich die Definition eines Polygons als besonders gut zur Bestimmung der Bestandskante erwiesen. Sofern mehrere kleine Polygone mit der Klasse "Pflanzenbestand" identifiziert werden, ist das neuronale Netz vorzugsweise darauf trainiert, lediglich dasjenige Polygon zu berücksichtigen, welches die größte Fläche aufweist, da es sich bei diesem mit größter Wahrscheinlichkeit um den abzuerntenden Pflanzenbestand und nicht um einen neben dem Feld liegenden Grünstreifen handelt.

Eine besonders vorteilhafte Weiterentwicklung des erfindungsgemäßen Systems sieht vor, dass die Recheneinheit dazu vorgesehen und eingerichtet ist, einen Referenzpunkt des Polygons zu bestimmen, der in einer Bildfläche des jeweiligen Bildes betrachtet eine größte oder eine kleinste Summe aus einer x-Pixelkoordinate und einer y-Pixelkoordinate relativ zu einem definierten Koordinatenkreuz aufweist, wobei das Koordinatenkreuz bezogen auf das jeweilige Bild ausgehend von einem Nullpunkt in horizontale Richtung eine x-Achse und in vertikale Richtung eine y-Achse definiert. Hierzu ist vorzugswiese vorgesehen, dass dem von der Kamera aufgenommenen Bild mit seinen Pixeln ein Koordinatensystem zugeordnet wird, wobei die Pixel jeweils eine x- und eine y-Pixelkoordinate erhalten. Auf diese Weise lässt sich jeder Pixel in dem Bild eindeutig benennen. Da sich das abzuerntende Feld in aller Regel - aus Sicht der Kamera betrachtet - als zusammenhängende Fläche darstellt, wobei eine Bestandskante, in die sich die Erntemaschine einspuren soll, typischerweise entweder in einer unteren linken oder einer unteren rechten Ecke des aufgenommenen Bildes befindet, ist es besonders vorteilhaft, die Bestandskante als ein Paar von Pixeln des zuvor bestimmten Polygons zu bestimmen, dessen Summe der Pixelkoordinaten die kleinste ist. Ebenso kann jedoch auch das Paar von Pixeln bestimmt werden, dessen Summe der Pixelkoordinaten die größte ist. Eine Entscheidung darüber, ob die kleinste oder größte Summe zur Bestimmung des Referenzpunkts verwendet werden soll, hängt dabei im Wesentlichen von der Anordnung des Koordinatenkreuzes in dem Bild ab.

Vorzugsweise kann das System eine Eingabeeinheit aufweisen, mittels der Eingaben zur weiteren Verarbeitung mittels der Recheneinheit vornehmbar sind, wobei vorzugsweise die Eingabeeinheit dazu vorgesehen und eingerichtet ist, das Koordinatenkreuz wechselweise an verschiedenen Stellen und mit verschiedenen Ausrichtungen der x-Achse und/oder der y-Achse zu definieren, wobei vorzugsweise das Koordinatenkreuz in einer unteren linken Ecke des jeweiligen Bildes mit der x-Achse in horizontale Richtung nach rechts und der y-Achse in vertikale Richtung nach oben oder in einer unteren rechten Ecke des jeweiligen Bildes mit der x-Achse in horizontale Richtung nach links und mit der y-Achse in vertikale Richtung nach oben definierbar ist. Wie vorstehend erwähnt, befindet die Bestandskante des Pflanzenbestands in aller Regel in einer linken oder rechten unteren Ecke des Sichtfelds einer Kamera. Um die vorbeschriebene Bestimmung der Bestandskante mittels Auffindens desjenigen Paars der Pixel dessen Summe die kleinste ist zu nutzen, hat sich die Definition der Koordinatenkreuzes an den unteren beiden Ecken als besonders vorteilhaft erwiesen. Ebenso wäre es jedoch auch denkbar, das Koordinatenkreuz an einen Punkt in dem Bild zu setzen und anschließend eine Koordinatentransformation durchzuführen. Vorzugsweise kann dabei vorgesehen sein, dass das System eine linke als auch eine rechte Bestandskante des Pflanzenbestands identifizieren kann. Vorzugsweise kann dabei ferner vorgesehen sein, dass ein Fahrer der Erntemaschine in Abhängigkeit einer Position der Kamera die entsprechende Einstellung auswählt, bevor das System die Bestandskante identifizieren soll.

Eine weitere Ausgestaltung der Erfindung sieht vor, dass die Recheneinheit dazu vorgesehen und eingerichtet ist, an dem Referenzpunkt die Bestandskante zu definieren, wobei sich die Bestandskante ausgehend von dem Referenzpunkt in vertikale Richtung erstreckt. Da ein Eckpunkt der Bestandskante in aller Regel im Sichtfeld der Kamera in einer unteren linken oder einer unteren rechten Ecke angeordnet ist und sich die Bestandskante ausgehend von dem Eckpunkt in vertikale Richtung erstreckt, die auch der Fahrtrichtung der Erntemaschine entspricht, ist die Definition des Referenzpunkts, von dem aus sich die Bestandskante in vertikale Richtung erstreckt, besonders von Vorteil. Die Bestandskante muss sich jedoch nicht in jedem Fall in lediglich vertikale Richtung erstrecken. Ebenso kann vorgesehen sein, dass die Bestandskante im Sichtfeld der Kamera unter einem Winkel zur vertikalen Richtung ausgerichtet ist.

Ferner ist es besonders vorteilhaft, wenn die Recheneinheit dazu vorgesehen und eingerichtet ist, einen Lenkalgorithmus zur automatischen Lenkung der Erntemaschine auszuführen, wobei vorzugsweise die Recheneinheit ferner dazu vorgesehen und eingerichtet ist, dem Lenkalgorithmus die Bestandskante zu übergeben und diesen bzw. diese mittels des Lenkalgorithmus derart zu verarbeiten, dass die Erntemaschine automatisch in den Pflanzenbestand einfährt und/oder automatisch beim Fahren in dem Pflanzenbestand eine Spur hält. Auf diese Weise unterstützt das System den Fahrer der Erntemaschine nicht nur beim Einspuren in die Bestandskante, sondern auch beim anschließenden Bearbeiten des Pflanzenbestands. Vorteilhafter Weise wird der Fahrer somit fortwährend unterstützt, sodass Fehler hinsichtlich einer Lenkung der Erntemaschine reduziert sind. Dabei kann vorzugsweise ferner vorgesehen sein, dass das System zusätzlich Daten eines GPS-Systems nutzt oder mit Reihentastern kombinierbar ist. Dabei kann es besonders von Vorteil sein, wenn der Fahrer die Erntemaschine so an den Pflanzenbestand heranfährt, dass dieser in einem Sichtfeld der Kamera auftaucht. Je nach Position der Kamera befindet sich der Pflanzenbestand in einem linken oder an einem rechten Rand des jeweiligen von der Kamera aufgenommen Bilds. Anschließend kann der Fahrer nach Eingabe über die Position der Kamera mittels der Eingabeeinheit das System aktivieren, welches den Pflanzenbestand und die Bestandskante identifiziert und die Erntemaschine automatisch, d.h. ohne händisches Zutun, in die Bestandskante einspurt und anschließend auch selbstständig über den Pflanzenbestand lenkt.

Die eingangs genannte Aufgabe wird ferner von einer selbstfahrenden Erntemaschine gemäß dem Kennzeichen des Anspruchs 11 gelöst. Vorteilhafte Ausgestaltungen ergeben sich aus den zugehörigen Unteransprüchen.

Die selbstfahrende Erntemaschine, welche insbesondere in Form eines selbstfahrenden Feldhäckslers vorliegen kann, umfasst ein Schneidorgan zum Schneiden auf einem Feld aufstehender Pflanzen sowie mindestens zwei schwenkbare, mit einem Untergrund in Kontakt stehende Rundräder, deren Stellung zwecks Änderung einer Fahrtrichtung der Erntemaschine veränderbar ist. Darüber hinaus umfasst die Erntemaschine ein System nach einem der Ansprüche 1 bis 10. Eine Recheneinheit des Systems ist dabei dazu vorgesehen und eingerichtet, die schwenkbaren Rundräder in Abhängigkeit einer bestimmten Bestandskante eines Pflanzenbestands, der mittels der Erntemaschine geerntet werden soll, anzusteuern, sodass eine Ausrichtung der Erntemaschine relativ zu dem Pflanzenbestand automatisch erfolgt.

Die erfindungsgemäße selbstfahrende Erntemaschine hat viele Vorteile. Insbesondere ermöglicht die Erntemaschine einen Pflanzenbestand automatisch, d.h. ohne händisches Zutun, anzufahren. Auf diese Weise erhält ein Fahrer der Erntemaschine Hilfe beim Einspuren der Erntemaschine in den Pflanzenbestand. Vorteilhafter Weise können somit Fehler beim Einspuren vermieden werden, die ein erneutes Überfahren der stehengebliebenen Pflanzen nötig machen würden. Die in Bezug auf das System genannten Vorteile bestehen dabei ebenfalls für die selbstfahrende Erntemaschine.

Eine weitere Ausgestaltung der Erfindung sieht dabei vor, dass die Recheneinheit dazu vorgesehen und eingerichtet ist, einen Lenkalgorithmus zur automatischen Lenkung der Erntemaschine auszuführen, mittels dessen die Erntemaschine in Abhängigkeit der Bestandskante automatisch in den Pflanzenbestand einfährt und/oder automatisch beim Fahren in dem Pflanzenbestand eine Spur hält. Auf diese Weise wird der Fahrer der Erntemaschine weiter beim Lenken der Erntemaschine unterstützt. Dabei kann es insbesondere vorgesehen sein, dass der Fahrer lediglich bei einem Fehlverhalten des Systems händisch in die Lenkung eingreift.

Gemäß einer vorzugsweisen Ausgestaltung der Erfindung ist vorgesehen, dass mindestens eine Kamera des Systems an einer Frontseite der Erntemaschine, insbesondere an einer Fahrerkabine, und/oder mindestens eine Kamera an einem Arbeitsorgan der Erntemaschine angeordnet ist. In jedem Fall ist es jedoch besonders bevorzugt, wenn die Kamera derart an der Erntemaschine angeordnet ist, dass sie die Frontumgebung der Erntemaschine erfassen kann. Hierzu haben sich diverse Positionen als vorteilhaft erwiesen. Abhängig von der Position der Kamera ist jedoch eine Koordinatentransformation notwendig, um mittels der Position der Kamera und der Position der Bestandskante auf den Lenkwinkel zu schließen. Bei einer Positionierung der Kamera seitlich an der Erntemaschine kann eine Koordinatentransformation jedoch entfallen.

Die Erfindung ist nachstehend anhand eines Ausführungsbeispiels, das in den Figuren dargestellt ist, näher erläutert. Es zeigt:
- Fig. 1:: Eine Seitenansicht einer erfindungsgemäßen selbstfahrenden Erntemaschine.
- Fig. 2:: Eine Visualisierung einer semantischen Bildsegmentierung eines Pflanzenbestands.
- Fig. 3:: Eine weitere Visualisierung der semantischen Bildsegmentierung des Pflanzenbestands.
- Fig. 4:: Eine schematische Ansicht eines erfindungsgemäßen Systems.

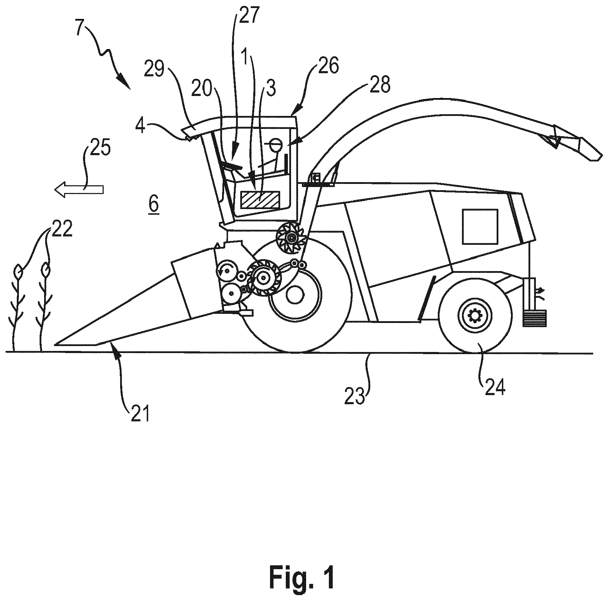

Eine erfindungsgemäße selbstfahrende Erntemaschine **7,** welche in **Figur 1** gezeigt ist, umfasst ein Schneidorgan **21** zum Schneiden auf einem Feld **9** aufstehender Pflanzen **22** sowie mindestens zwei schwenkbare, mit einem Untergrund **23** in Kontakt stehende Rundräder **24.** Eine Stellung der Rundräder **24** ist dabei zwecks Änderung einer Fahrtrichtung der Erntemaschine **7** veränderbar. Hierzu umfasst die Erntemaschine **7** ein Lenkrad **27,** das von einem Fahrer **28** der Erntemaschine **7** bedient werden kann, um die Erntemaschine **7** zu lenken. Darüber hinaus umfasst die Erntemaschine **7** eine Fahrerkabine **26,** von welcher aus die Erntemaschine **7** von dem Fahrer **28** steuerbar ist.

Die Erntemaschine **7** ist dazu vorgesehen einen Pflanzenbestand **10** auf einem Feld **9** abzuernten bzw. zu verarbeiten. Bei der Erntemaschine **7** kann es sich beispielsweise um einen Feldhäcksler handeln, der auf dem Feld **9** aufstehende Maispflanzen zerhäckseln soll. Um den Pflanzenbestand **10** abernten zu können, muss die Erntemaschine **7** in Richtung des Pflanzenbestands **10** gelenkt werden, wobei eine Bestandskante **2** des Pflanzenbestands **10** derart abgefahren werden muss, dass das Schneidorgan **21** die Pflanzen **22** erreicht.

Hierzu umfasst die Erntemaschine **7** ein System **1** zur Bestimmung einer Bestandskante **2** eines Pflanzenbestands **10.** Das System **1** umfasst wiederum eine Recheneinheit **3** sowie eine Kamera **4,** welche an einem Kabinendach **29** der Fahrerkabine 26 der Erntemaschine 7 angeordnet und mit einem Sichtfeld in Richtung einer Frontumgebung **6** der Erntemaschine **7** ausgerichtet ist. Die Kamera **4** ist dazu vorgesehen und ausgerichtet, diskrete Bilder der Frontumgebung **6** zu erfassend und diese an die Recheneinheit **3** des Systems **1** zu leiten. Die Recheneinheit **3** verarbeitet die von der Kamera **4** erfassten Bilder schließlich. Hierzu nutzt die Recheneinheit **3** eine künstliche Intelligenz in Form eines neuronalen Netzwerks. Dabei segmentiert die künstliche Intelligenz die einzelnen aufgenommenen Bilder zunächst. Um die Bestandskante **2** der Pflanzenbestands **10** zu bestimmen, werden die resultierenden Segmente **12** der Bilder den Klassen "Pflanzenbestand **10"** und "Hintergrund" zugeordnet. Ausgehend von der Segmentierung und der Klassifizierung wird ein Polygon **13** definiert, das entlang einer Segmentgrenze **14** zwischen den Segmenten **12** der beiden Klassen verläuft.

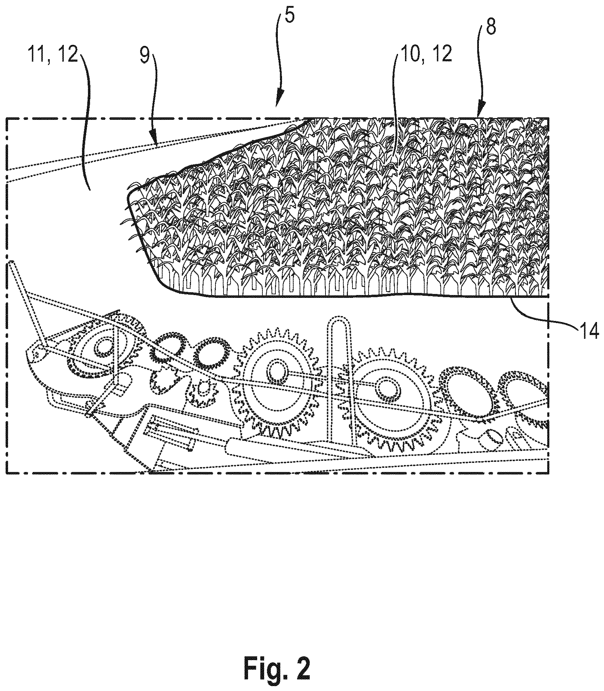

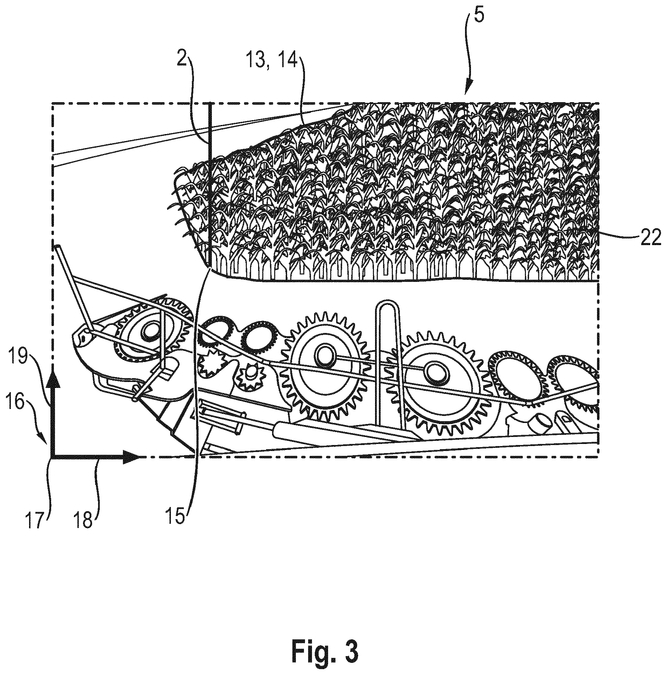

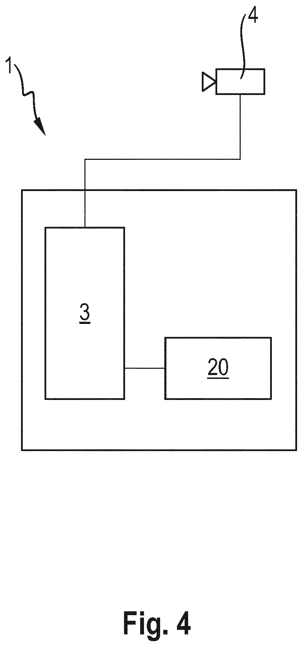

Es ist vorgesehen, dass der Fahrer **28** der Erntemaschine **7** zunächst eigenständig an den Pflanzenbestand **10** heranfährt, sodass das Sichtfeld der Kamera **4** den Pflanzenbestand **10** erfasst, wie in den **Figuren 2** **und** **3** gezeigt ist. Anschließend aktiviert der Fahrer **28** das System **1** der Erntemaschine **7.** Hierzu nutzt der Fahrer **28** eine Eingabeeinheit **20** der Erntemaschine **7,** welche in der Fahrerkabine **26** untergebracht ist, um ein Koordinatenkreuz **16** zu definieren. Die Eingabeeinheit **20** ist dabei in Signal übertragender Weise mit einer Recheneinheit **3** verbunden, welche wiederum in Signal übertragender Weise mit der Kamera **4** verbunden ist, wie in **Figur 4** schematisch dargestellt ist. Auf diese Weise lässt sich die Recheneinheit **3** mittels der Eingabeeinheit **20** steuern, wobei die Eingabeeinheit **20** Signale von der Kamera **4** erhält.

In dem in den Figuren 2 und 3 gezeigten Sichtfeld der Kamera 4 definiert der Fahrer 28 einen Nullpunkt 17 des Koordinatenkreuzes 16 in einer unteren linken Ecke des Bilds 5 mit einer x-Achse 18 in horizontale Richtung nach rechts und einer y-Achse 19 in vertikale Richtung nach oben. Das System 1 erfasst mittels der Kamera 4 diskrete Bilder der Frontumgebung **6,** und damit auch des Pflanzenbestands **10,** und segmentiert diese. Als Ergebnis werden zwei Segmente **12** gebildet, wobei das erste Segment **12** der Klasse "Pflanzenbestand **10"** zugeordnet und das zweite Segment **12** der Klasse "Hintergrund" zugeordnet ist, wie in der **Figur 2** erkennbar ist. Die Bilder werden dabei in ein Koordinatensystem überführt, sodass jeder Pixel des Bilds **5** eine x- und eine y-Pixelkoordinate und damit eindeutig zugeordnet werden kann. Ein Koordinatenkreuz **16** ist dabei von einem Nullpunkt **17** aus definiert, der sich in der **Figur 1** in der unteren linken Ecke des Bildes befindet. Eine x-Achse **18** verläuft dabei in horizontale Richtung nach rechts, eine y-Achse **19** in vertikale Richtung nach oben. Anschließend wird auf Grundlage der Segmentierung ein Polygon **13** berechnet, welches das Segment **12** der Klasse "Pflanzenbestand **10"** einschließt. Ausgehend von dem Polygon **13** wird ein Referenzpunkt **15** des Polygons **13** bestimmt. Der Referenzpunkt **15** bestimmt sich aus dem Paar von Pixelkoordinaten dessen Summe die kleinste aller Paare der Pixelkoordinaten des Polygons **13** ist.

Ausgehend von dem ermittelten Referenzpunkt **15** wird die Bestandskante **2** definiert, die sich ausgehend von dem Referenzpunkt **15** in vertikale Richtung erstreckt. Die Bestandskante **2** ist in **Figur 3** mit einer vertikalen Linie über eine gesamte Höhe des Polygons **13** dargestellt.

Die Bestandskante 2 wird anschließend an einem Lenkalgorithmus zur automatischen Lenkung der Erntemaschine 7 übergeben. Der Lenkalgorithmus ist dabei dazu geeignet, die Erntemaschine 7 automatisch, d.h. ohne händisches Zutun, in den Pflanzenbestand 10 einzufahren und auch beim weiteren Fahren der Erntemaschine **7** eine Spur zu halten, um den Pflanzenbestand **10** optimal abernten zu können. Die Erntemaschine **7** lenkt damit automatisch in den Pflanzenbestand **10** und hält anschließend weiter im Pflanzenbestand **10** die Spur.

Sollte der Fahrer **28** mit dem vorgeschlagenen Lenkwinkel des Systems 1 nicht einverstanden sein, so lässt sich die Automatik durch eine Bewegung des Lenkrades 27 deaktivieren und die manuelle Lenkung wird wieder aktiviert.

### Bezugszeichenliste

- 1: System
- 2: Bestandskante
- 3: Recheneinheit
- 4: Kamera
- 5: Bild
- 6: Frontumgebung
- 7: Erntemaschine
- 8: Pflanzenbereich
- 9: Feld
- 10: Pflanzenbestand
- 11: Restbereich
- 12: Segment
- 13: Polygon
- 14: Segmentgrenze
- 15: Referenzpunkt
- 16: Koordinatenkreuz
- 17: Nullpunkt
- 18: x-Achse
- 19: y-Achse
- 20: Eingabeeinheit
- 21: Schneidorgan
- 22: Pflanze
- 23: Untergrund
- 24: Rundrad
- 25: Fahrrichtung
- 26: Fahrerkabine
- 27: Lenkrad
- 28: Fahrer
- 29: Kabinendach

## Patentansprüche

1. System (1) zur Bestimmung einer Bestandskante (2) eines Pflanzenbestands (10), umfassend
- eine Recheneinheit (3) sowie
- mindestens eine Kamera (4),
wobei die Kamera (4) dazu vorgesehen und eingerichtet ist, optische Informationen in Form diskreter Bilder (5) einer Frontumgebung (6) einer landwirtschaftlichen Erntemaschine (7) zu erfassen,
wobei die Recheneinheit (3) und die Kamera (4) derart in Daten übertragender Weise miteinander verbunden sind, dass die Bilder (5) an die Recheneinheit (3) leitbar sind,
wobei die Recheneinheit (3) dazu vorgesehen und eingerichtet ist, mindestens eines der Bilder (5) unter Nutzung einer künstlichen Intelligenz derart zu verarbeiten, dass ein Pflanzenbereich (8) eines Feldes (9), auf dem ein Pflanzenbestand (10) steht, von einem verbleibenden Restbereich (11) des Feldes (9) abgegrenzt und der Pflanzenbestand (10) auf diese Weise bestimmt wird,
wobei die Recheneinheit (3) dazu vorgesehen und eingerichtet ist, anhand der vorgenommenen Bestimmung des Pflanzenbestands (10) die Bestandskante des Pflanzenbestands (10) zu bestimmen.

2. System (1) nach Anspruch 1, **dadurch gekennzeichnet, dass** die künstliche Intelligenz ein trainiertes neuronales Netzwerk umfasst.

3. System (1) nach Anspruch 1 oder 2, **dadurch gekennzeichnet, dass** die Recheneinheit (3) dazu vorgesehen und eingerichtet ist, eine Segmentierung einzelner Bilder (5) vorzunehmen, mittels der ein Inhalt eines jeweiligen Bildes (5) in zusammenhängende Segmente (12) unterteilt wird.

4. System (1) nach Anspruch 3, **dadurch gekennzeichnet, dass** die Recheneinheit (3) dazu vorgesehen und eingerichtet ist, einzelne Bilder (5) semantisch zu segmentieren, wobei zusammenhängende Segmente (12) verschiedenen Klassen zugeordnet werden, wobei vorzugweise eine Klasse "Pflanzenbestand" und eine Klasse "Hintergrund" sind.

5. System (1) nach einem der vorhergehenden Ansprüche, **dadurch gekennzeichnet, dass** die Recheneinheit (3) dazu vorgesehen und eingerichtet ist, entlang der Bestandskante (2) ein Polygon (13) zu definieren.

6. System (1) nach Anspruch 5, **dadurch gekennzeichnet, dass** die Recheneinheit (3) dazu vorgesehen und eingerichtet ist, das Polygon (13) entlang einer Segmentgrenze (14) zwischen den Segmenten (12) der Klassen "Pflanzenbestand" und "Hintergrund" zu definieren.

7. System (1) nach Anspruch 5 oder 6, **dadurch gekennzeichnet, dass** die Recheneinheit (3) dazu vorgesehen und eingerichtet ist, einen Referenzpunkt (15) des Polygons (13) zu bestimmen, der in einer Bildfläche des jeweiligen Bildes (5) betrachtet eine größte oder eine kleinste Summe aus einer x-Pixelkoordinate und einer y-Pixelkoordinate relativ zu einem definierten Koordinatenkreuz (16) aufweist, wobei das Koordinatenkreuz (16) bezogen auf das jeweilige Bild ausgehend von einem Nullpunkt (17) in horizontale Richtung eine x-Achse (18) und in vertikale Richtung eine y-Achse (19) definiert.

8. System (1) nach Anspruch 7, **gekennzeichnet durch** eine Eingabeeinheit (20), mittels der Eingaben zur weiteren Verarbeitung mittels der Recheneinheit (3) vornehmbar sind, wobei vorzugsweise die Eingabeeinheit (20) dazu vorgesehen und eingerichtet ist, das Koordinatenkreuz (16) wechselweise an verschiedenen Stellen und mit verschiedenen Ausrichtungen der x-Achse (18) und/oder der y-Achse (19) zu definieren, wobei vorzugsweise das Koordinatenkreuz (16)
i) in einer unteren linken Ecke des jeweiligen Bildes (5) mit der x-Achse (18) in horizontale Richtung nach rechts und der y-Achse (19) in vertikale Richtung nach oben
oder
ii) in einer unteren rechten Ecke des jeweiligen Bildes (5) mit der x-Achse (18) in horizontale Richtung nach links und mi der y-Achse (19) in vertikale Richtung nach oben
definierbar ist.

9. System (1) nach Anspruch 7 oder 8, **dadurch gekennzeichnet, dass** die Recheneinheit (3) dazu vorgesehen und eingerichtet ist, an dem Referenzpunkt (15) die Bestandskante (2) zu definieren, wobei sich die Bestandskante (2) ausgehend von dem Referenzpunkt (15) in vertikale Richtung erstreckt.

10. System (1) nach einem der Ansprüche 1 bis 9, **dadurch gekennzeichnet, dass** die Recheneinheit (3) dazu vorgesehen und eingerichtet ist, einen Lenkalgorithmus zur automatischen Lenkung der Erntemaschine (7) auszuführen, wobei vorzugsweise die Recheneinheit (3) ferner dazu vorgesehen und eingerichtet ist, dem Lenkalgorithmus die Bestandskante (2) zu übergeben und diesen bzw. diese mittels des Lenkalgorithmus derart zu verarbeiten, dass die Erntemaschine (7) automatisch in den Pflanzenbestand (10) einfährt und/oder automatisch beim Fahren in dem Pflanzenbestand (10) eine Spur hält.

11. Selbstfahrende Erntemaschine (7), insbesondere in Form eines selbstfahrenden Feldhäckslers, umfassend
- ein Schneidorgan (21) zum Schneiden auf einem Feld (9) aufstehender Pflanzen (22),
- mindestens zwei schwenkbare, mit einem Untergrund (23) in Kontakt stehende Rundräder (24), deren Stellung zwecks Änderung einer Fahrtrichtung der Erntemaschine (7) veränderbar ist,
- ein System (1) nach einem der vorhergehenden Ansprüche,
wobei eine Recheneinheit (3) des Systems (1) dazu vorgesehen und eingerichtet ist, die schwenkbaren Rundräder (24) in Abhängigkeit einer bestimmten Bestandskante (2) eines Pflanzenbestands (10), der mittels der Erntemaschine (7) geerntet werden soll, anzusteuern, sodass eine Ausrichtung der Erntemaschine (7) relativ zu dem Pflanzenbestand (10) automatisch erfolgt.

12. Selbstfahrende Erntemaschine (7) nach Anspruch 11, **dadurch gekennzeichnet, dass** die Recheneinheit (3) dazu vorgesehen und eingerichtet ist, einen Lenkalgorithmus zur automatischen Lenkung der Erntemaschine (7) auszuführen, mittels dessen die Erntemaschine (7) in Abhängigkeit der Bestandskante (2) automatisch in den Pflanzenbestand (10) einfährt und/oder automatisch beim Fahren in dem Pflanzenbestand (10) eine Spur hält.

13. Selbstfahrende Erntemaschine (7) nach Anspruch 11 oder 12, **dadurch gekennzeichnet, dass** mindestens eine Kamera (4) des Systems an einer Frontseite der Erntemaschine (7), insbesondere an einer Fahrerkabine (26), und/oder mindestens eine Kamera (4) an einem Arbeitsorgan der Erntemaschine (7) angeordnet ist.
